# EUROPÄISCHE PATENTSCHRIFT

(11) **EP 0 706 960 B1**
(45) Veröffentlichungstag und Bekanntmachung des Hinweises auf die Patenterteilung: **01.03.2000**
(21) Anmeldenummer: 95810619.7
(22) Anmeldetag: 03.10.1995
(51) Int. Cl.: B65G 47/31

(54) **Anlage zur Kommissionierung von Gegenständen**
Device for order picking of articles
Installation pour préparer la commande d'articles

(30) Priorität: 10.10.1994 CH 304394
(43) Veröffentlichungstag der Anmeldung: 17.04.1996
(73) Patentinhaber: GRAPHA-HOLDING AG, 6052 Hergiswil (CH)
(72) Erfinder: Willi, Maier, CH-8302 Kloten (CH); Werner, Roth, CH-8610 Uster (CH)

(56) Entgegenhaltungen:
- EP-A- 0 422 635
- EP-A- 0 540 464
- DE-A- 1 481 438
- DE-A- 2 155 458
- DE-A- 2 427 156
- FR-A- 1 260 830
- PATENT ABSTRACTS OF JAPAN vol. 7 no. 269 (M-259) [1414] ,30.November 1983 & JP-A-58 148114 (MITSUBISHI DENKI K.K.) 3.September 1983,
- PATENT ABSTRACTS OF JAPAN vol. 7 no. 20 (M-188) [1165] ,26.Januar 1983 & JP-A-57 175616 (OKAMURA SEISAKUSHO) 28.Oktober 1982,

## Beschreibung

Die Anmeldung betrifft eine Anlage zur Kommissionierung von Gegenständen, die mittels einer Vielzahl gelenkig verbundener, eine seitlich kippbare Tragplatte aufweisenden Wagen auf einem Förderstrang einer etwa rechtwinklig dazu angeordneten Ausschleusvorrichtung zugeführt werden, wobei die in Förderrichtung der auszuschleusenden Gegenstände nach unten geneigt angeordnete Ausschleusvorrichtung an einem Eingang mit den von den Wagen gekippten Gegenständen beladbar und an einem Ausgang von den Gegenständen entladbar ist.

Anlagen dieser Art werden seit langem in Verteilzentren zur Kommissionierung von in Läden angebotenen Gütern verwendet. In diesen Anlagen werden die Güter einzeln mit einem Förderer in die vorgesehene Ausschleusvorrichtung geworfen und rutschen auf dieser durch ihr Eigengewicht auf einer Rollbahn nach unten gegen einen Anschlag oder einen bereits ausgeschleusten Gegenstand. Die in eine Ausschleusvorrichtung eingebrachten Gegenstände sind in der Regel sehr unterschiedlich, insbesondere bezüglich ihres Gewichtes und ihrer Zerbrechlichkeit. Diese Gegenstände sind besipielsweise verpackte Gläser, Tiefkühlprodukte, Kisten mit Flaschen, verpackte Früchte und verpackte Papeterieprodukte. Zum Entladen der Ausschleusvorrichtung werden jeweils die untersten Gegenstände von Hand der Ausschleusvorrichtung entnommen und einer weiteren Transportvorrichtung, beispielsweise einem Transportband übergeben. Bei diesen bekannten Anlagen bestand die Schwierigkeit, dass empfindliche Gegenstände beim Aufprall auf einen bereits ausgeschleusten Gegenstand oder durch einen nachkommenden Gegenstand oft beschädigt wurden. Als nachteilig wird auch angesehen, dass die untersten Gegenstände oft verklemmt sind und nur mit Mühe entnommen werden konnten. Bei den bekannten Anlagen war somit das Entladen mühsam und der Anteil beschädigter Gegenstände hoch.

Die EP-A-0 540 464 offenbart eine Anlage zum Sortieren von Stückgütern oder zur Kommissionierung von Gegenständen, die mittels einer Vielzahl gelenkig miteinander verbundener, eine seitlich kippbare Tragplatte aufweisenden Wagen auf einem Förderstrang einer etwa rechtwinklig dazu angeordneten Ausschleusvorrichtung zugeführt werden, welche Ausschleusvorrichtung an einem Eingang mit den von den Wagen gekippten Gegenständen beladbar und an einem Ausgang von den Gegenständen entladbar ist, wobei die als Rutsche bezeichnete Ausschleusvorrichtung zwischen Eingang und Ausgang in Förderrichtung der auszuschleusenden Gegenstände nach unten geneigt angeordnet ist.

Der Erfindung liegt die Aufgabe zugrunde, eine Anlage der genannten Art zu schaffen, die wenigstens eine der genannten Schwierigkeiten vermeidet.

Die Aufgabe ist bei einer gattungsgemässen Anlage dadurch gelöst, dass die Ausschleusvorrichtung vor dem Ausgang ein Taktband aufweist und vor diesem wenigstens ein weiteres Band angeordnet ist, auf dem wenigstens ein Gegenstand zur gesteuerten Abgabe an das Taktband positionierbar ist.

Bei der erfindungsgemässen Anlage werden die Gegenstände auf der Ausschleusvorrichtung somit getaktet an ein Taktband abgegeben. Auf diesem Taktband können dann die Gegenstände sehr schonend hintereinander nach unten gefördert werden. Ein Anschlag am unteren Ende der Ausschleusvorrichtung ist nicht mehr notwendig. Auch bei vollständig gefülltem Taktband liegen die Gegenstände nicht unter hohem Druck aneinander, sondern geordnet und lose nebeneinander, so dass sie am unteren Ende des Taktbandes oder auf nachfolgenden Rollen wesentlich einfacher als bisher entnommen werden können. Der Anteil beschädigter Gegenstände ist wesentlich geringer als bisher, da sie nicht aufeinander prallen, sondern einzeln an das Taktband übergeben werden.

Die Erfindung betrifft zudem ein Verfahren zur Kommsissionie- von Gegenständen, die mittels einer Vielzahl gelenkig verbundener, eine seitlich kippbare Tragplatte aufweisenden Wagen auf einem Förderstrang einer etwa rechtwinklig dazu angeordneten Ausschleusvorrichtung zugeführt werden, wobei die in Förderrichtung der auszuschleusenden Gegenstände nach unten geneigt angeordnete Ausschleusvorrichtung an einem Eingang mit den von den Wagen gekippten Gegenständen beladbar und an einem Ausgang von den Gegenständen entladbar ist, und die zwischen Eingang und Ausgang mit Gegenständen füllbar ist. Erfindungsgemäss ist bei diesem Verfahren vorgesehen, dass die Gegenstände auf der Ausschleusvorrichtung in eine vorbestimmte Position gebracht und aus dieser Position getaktet weitergefördert und vor dem Ausgang in wenigstens einer vergleichsweise dichten Reihe zur Entnahme angeordnet werden.

Das erfindungsgemässe Verfahren löst ebenfalls die gestellte Aufgabe. Durch die Positionierung und nachfolgende getaktete Anordnung der Gegenstände ist es zudem möglich, den Füllungsgrad der Gegenstände in der Ausschleusvorrichtung wesentlich zu erhöhen. Insbesondere ist es möglich, die Gegenstände nebeneinander zu positionieren und damit wenigstens eine doppelte Reihe von Gegenständen zu bilden.

Eine besonders leistungsfähige Ausschleusung ergibt sich dann, wenn gemäss einer Weiterbildung der Erfindung am Eingang der Ausschleusvorrichtung ein Abzugsband angeordnet ist. Dieses weist vorzugsweise eine stark adhäsive Oberseite auf, so dass auf dieses Band geworfene Gegenstände entsprechend der Laufgeschwindigkeit dieses Bandes gefördert werden.

Nach einer Weiterbildung der Erfindung ist vorzugsweise anschliessend an das Abzugsband ein Bremsband angeordnet, das wesentlich langsamer läuft als das Abzugsband. Die Aussenseite des Bremsbandes ist vorzugsweise wesentlich weniger adhäsiv als diejenige des Abzugsbandes. Auf dem Bremsband werden somit die Gegenstände gebremst und zwar vorzugsweise soweit, dass sie auf diesem zum Stillstand kommen. Ein am Ende des Bremsbandes positionierter Gegenstand kann durch eine Betätigung des Taktbandes auf dieses aufgenommen werden. Die Steuerung des Taktbandes erfolgt vorzugsweise durch eine Lichtschranke, mit welcher die Anwesenheit eines Gegenstandes am Ende des Bremsbandes feststellbar ist. Mittels einer solchen Lichtschranke kann zudem die Länge des Gegenstandes ermittelt und entsprechend das Taktband bewegt werden. Bei einem langen Gegenstand wird das Taktband zu seiner Aufnahme entsprechend länger bewegt als zur Aufnahme eines kürzeren Gegenstandes. Dadurch ist eine besonders leistunsfähige und optimale Füllung der Ausschleusvorrichtung möglich.

Weitere vorteilhafte Weiterbildungen und Merkmale ergeben sich aus den abhängigen Patentansprüchen, der nachfolgenden Beschreibung sowie der Zeichnung. Ein Ausführungsbeispiel der Erfindung wird nachfolgend anhand der Zeichnung näher erläutert. Es zeigen:
- Fig. 1: schematisch eine Draufsicht auf einen Teil der erfindungsgemässen Anlage,
- Fig. 2 bis 5: schematisch jeweils eine Seitenansicht der Ausschleusvorrichtung zur Veranschaulichung des Verfahrensablaufs, und
- Fig. 6: schematisch ein Beispiel einer Anlage mit mehreren Ausschleusvorrichtungen.

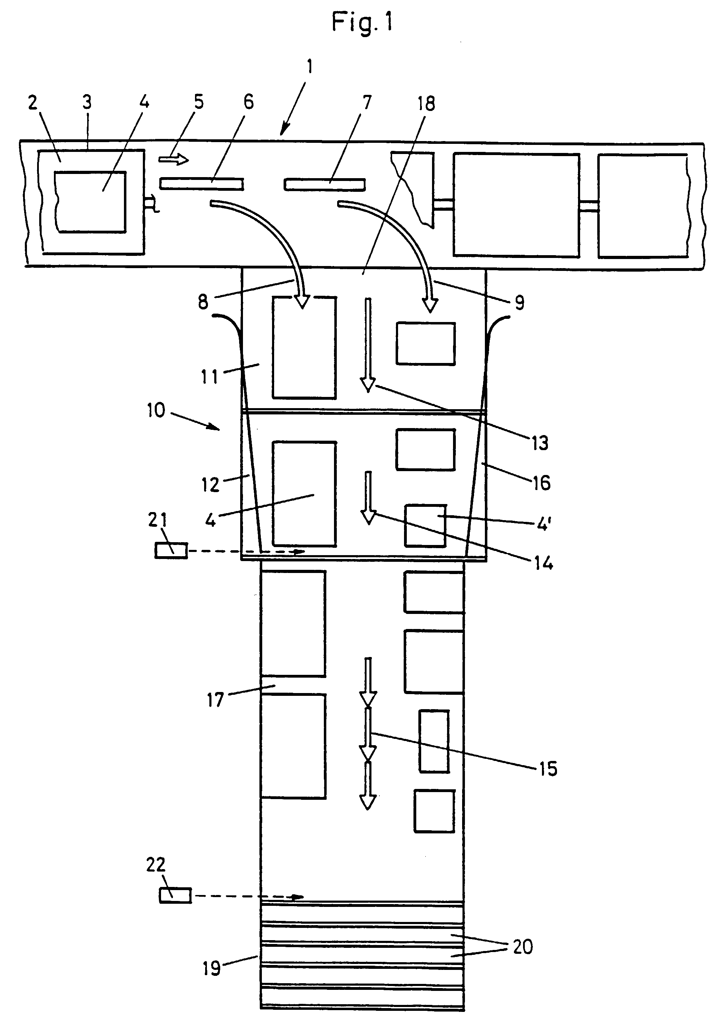

Die Figur 1 zeigt einen Stückgutförderer 1, dessen angetriebener Förderstrang aus einer Vielzahl gelenkig miteinander verbundener Wagen 2 besteht, auf denen jeweils auf einer im wesentlichen horizontalen Tragplatte 3 sich ein Gegenstand 4 befindet, der durch Kippen der Tragplatte 3 wahlweise durch Betätigen einer Kulisse 6 in Richtung des Pfeiles 8 oder durch Betätigung einer weiteren Kulisse 7 in Richtung des Pfeiles 9 auf eine Ausschleusvorrichtung 10 abgegeben werden kann. Stückgutförderer dieser Art sind an sich gut bekannt. Der Gegenstand 4 ist beispielsweise eine Kiste, ein tiefgefrorenes und verpacktes Lebensmittel, ein Haushaltsartikel und dergleichen.

Die Ausschleusvorrichtung 10 weist einen Eingang 18 auf, der seitlich neben dem Förderer und im wesentlichen auf dessen Höhe angeordnet ist. Am anderen Ende der Ausschleusvorrichtung 10 befinden sich mehrere Rollen 20, die einen Ausgang 19 zur Entnahme der ausgeschleusten Gegenstände 4 bilden. Der Ausgang 19 ist vorzugsweise tiefer angeordnet als der Eingang 18. Zwischen dem Eingang 18 und dem Ausgang 19 sind nacheinander ein Abzugsband 11, ein Bremsband 12 und ein Taktband 17 angeordnet, auf denen die Gegenstände 4 vom Eingang 18 zum Ausgang 19 befördert werden und die nachfolgend näher erläutert werden.

Das Abzugsband 11 ist ein endloses Band, das um eine Antriebsrolle 26 und eine Umlenkrolle 29 gelegt und von einem Motor 23 angetrieben ist. Die Aussenseite lla des Abzugsbandes 11 ist vergleichsweise stark adhäsiv ausgebildet, derart, dass ein auf das Abzugsband 11 geworfener Gegenstand auf diesem nicht rutscht und die Geschwindigkeit des Bandes annimmt. Die Geschwindigkeit des Abzugsbandes 11 beträgt beispielsweise 2 m pro Sekunde. Das Band 11 und auch die anderen Bänder sind selbstverständlich an einem hier nicht näher dargestellten Gestell 32 befestigt.

Das Bremsband 12 schliesst unmittelbar an das Ende des Abzugsbandes 11 an und ist ebenfalls um eine Antriebsrolle 27 und eine Umlenkrolle 30 gelegt. Die Antriebsrolle 27 ist von einem Motor 24 angetrieben. Die Bänder 11 und 12 können mittels eines hier nicht gezeigten Übertriebs jedoch auch von einem einzigen Motor angetrieben sein. Die Aussenseite 12a des Bremsbandes 12 ist gleitend ausgebildet und somit viel weniger adhäsiv als die Oberseite lla. Die Geschwindigkeit des Bremsbandes 12 ist wesentlich kleiner als diejenige des Abzugsbandes 11, vorzugsweise um ein Mehrfaches kleiner, und beträgt beispielsweise 0,5 m pro Sekunde. Die Bewegungsrichtungen der beiden Bänder 11 und 12 sind gleich und in der Figur 1 mit den Pfeilen 13 und 14 angedeutet. Am Ende des Bremsbandes 12 ist seitlich eine Lichtschranke 21 angebracht, mit der die Anwesenheit eines Gegenstandes 4 auf der Höhe dieser Lichtschranke 21 feststellbar ist. Aufgrund entpsrechender Signale der Lichtschranke wird mit einer hier nicht dargestellten Steuervorrichtung das Taktband 17 gesteuert.

Wie die Figur 1 zeigt, ist das Taktband um eine Antriebsrolle 28 und um eine Umlenkrolle 31 gelegt und wird von einem Motor 25 angetrieben. Das Taktband 17 ist wesentlich länger als das Abzugsband 11 und das Bremsband 12. Die Aussenseite 17a des Taktbandes 17 ist vorzugsweise weniger adhäsiv ausgebildet als diejenige des Abzugsbandes 11. Am Ende des Taktbandes 17 ist eine weitere Lichtschranke 22 angeordnet, mit welcher die Anwesenheit eines Gegenstandes 4 am Ende des Taktbandes 17 feststellbar ist. Die Lichtschranken 21 und 22 können selbstverständlich auch durch andere geeignete Schranken, beispielsweise auch mechanisch betätigte Schranken ersetzt sein.

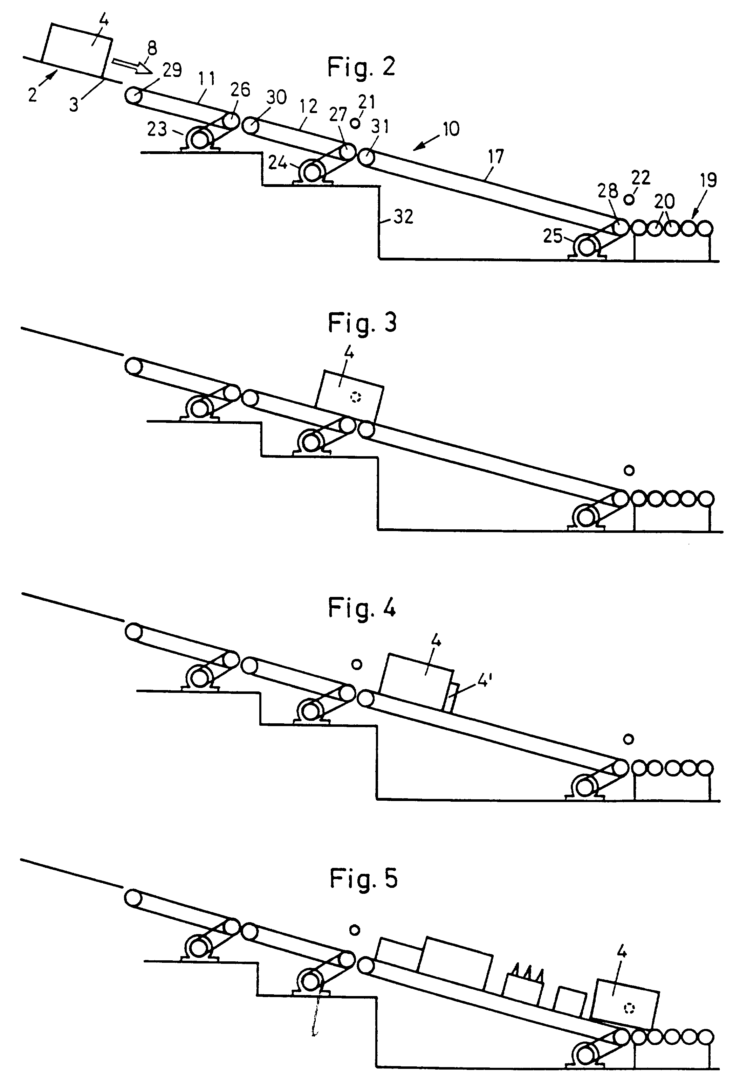

Der Arbeitsablauf der erfindungsgemässen Anlage wird nachfolgend anhand der Figuren 2 bis 5 näher erläutert.

Die Figur 2 zeigt einen Wagen 2, dessen Tragplatte 3 zur Ausschleusung eines Gegenstandes 4 mittels der Kulisse 6 oder 7 in einen vorbestimmten geneigten Zustand gebracht ist. Infolge der Neigung der Tragplatte 3 gleitet der Gegenstand 4 in Richtung des Pfeils 8 auf das Abzugsband 11 und wird auf diesem entsprechend der Geschwindigkeit dieses Bandes 11 in Figur 2 nach rechts befördert. Infolge der erwähnten hohen Adhäsivität des Bandes 11 kann der Gegenstand 4 hierbei beschleunigt werden. Ein das Band 11 seitlich überragender Gegenstand 4 wird durch trichterförmig angeordnete Leitwände 11 ausgerichtet. Das Abzugsband 11 ist vorzugsweise dauernd und mit gleicher Geschwindigkeit angetrieben.

Hat der Gegenstgand 4 das untere Ende des Abzugsbandes 11 erreicht, so gelangt er auf das Bremsband 12, das wie erwähnt eine vergleichsweise rutschige Aussenseite 12a aufweist und wesentlich langsamer läuft als das Abzugsband 11. Der Gegenstand rutscht unter Verlangsamung seiner Geschwindigkeit auf dem Band 12 in gleicher Richtung weiter und gelangt schliesslich in die in Figur 3 gezeigte Position. Wie ersichtlich, liegt der Gegenstand 4 am vorderen Ende auf dem Taktband 17 auf, das zu diesem Zeitpunkt stillsteht.

Durch Betätigung der andern Kulisse 7 bzw. 6 wird ein weiteres Paket ausgeschleust, das in gleicher Weise durch das Abzugsband 11 und das Bremsband 12 in die in Figur 3 gezeigte Position bewegt wird, wobei dieser weitere in Figur 3 nicht gezeigte Gegenstand jedoch seitlich versetzt ist. In Figur 1 ist dieser weitere Gegenstand mit dem Bezugszeichen 4' bezeichnet.

Wird nun mittels der Lichtschranke 21 die Anwesenheit zweier Gegenstände 4 und 4' am Ende des Brembandes 12 bzw. am Anfang des Taktbandes 17 festgestellt, so wird das Taktband 17 in Bewegung gesetzt und die beiden Gegenstände 4 und 4' vollständig vom Taktband 17 aufgenommen, wie dies in Figur 4 gezeigt ist. Das Taktband 17 wird anschliessend wieder in den Ruhezustand versetzt. Der Gegenstand 4 bleibt dann in der in Figur 4 gezeigten Position. Der oben geschilderte Vorgang wird nun mit zwei weiteren Gegenständen 4 wiederholt. Die zuerst ausgeschleusten beiden Gegenstände werden entsprechend auf dem Taktband 17 um einen Taktschritt nach unten bewegt. Mittels der Lichtschranke 21 wird vorzugsweise auf dem Bremsband 12 die Länge der Gegenstände festgestellt und das Taktband 17 entsprechend betätigt. Bei langen Gegenständen ist somit der Taktschritt grösser als bei kürzeren Gegenständen. Auf dem Taktband 17 werden somit die Gegenstände 4 und 4' sowie die nachfolgenden Gegenstände schrittweise nach unten zum Ausgang 19 befördert. Haben die vordersten Gegenstände 4 und 4' die in Figur 5 gezeigte Position erreicht, so wird die Anwesenheit dieser Gegenstände am Ende des Taktbandes 17 durch die Lichtschranke 22 angezeigt. Durch entsprechende Signale wird nun angezeigt, dass diese Ausschleusvorrichtung 10 gefüllt ist. Eine weitere Füllung zumindest im Bereich des Bremsbandes 12 ist an sich jedoch möglich.

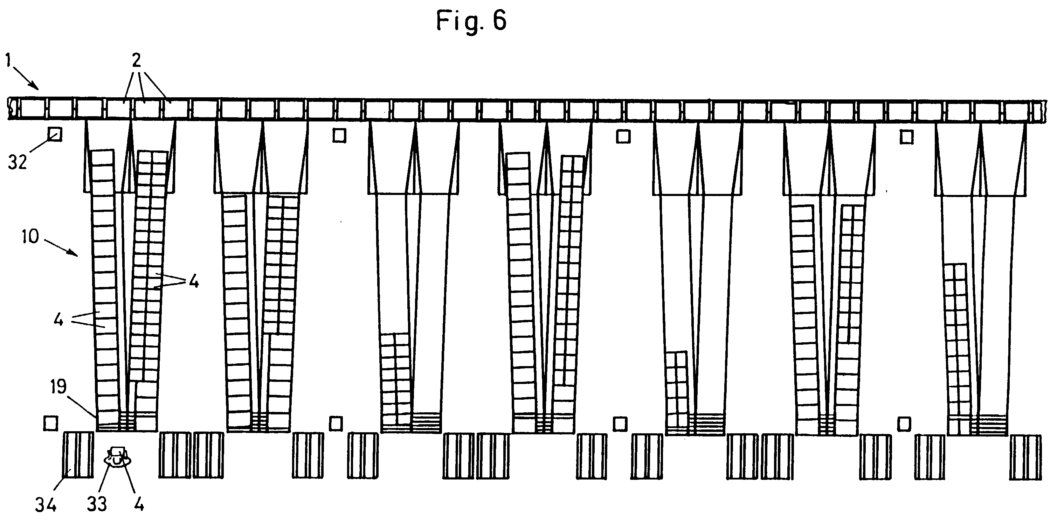

Die Figur 6 zeigt die Anlage 1 mit mehreren Aussschleusvorrichtungen 10. Wie ersichtlich, können diese Ausschleusvorrichtungen 10 je nach Grösse der Gegenstände 4 einfach oder doppelt belegt werden. Möglich ist auch abwechslungsweise eine einfache oder doppelte Belegung. Selbstverständlich können die Ausschleusvorrichtungen 10 auch nur teilweise gefüllt werden. Gezeigt ist eine Bedienungsperson 33, die einer Ausschleusvorrichtung 10 einen Gegenstand 4 entnimmt und einer weiteren Transportvorrichtung 34 zuführt. Da die jeweils untersten Gegenstände auf den Auschleussvorrichtungen 10 frei und nicht an einem Anschlag anliegend sind, können diese Gegenstände jeweils mühelos gefasst und von den Rollen 10 weggetragen werden.

## Patentansprüche

1. Anlage zur Kommissionierung von Gegenständen (4), die mittels einer Vielzahl gelenkig verbundener, eine seitlich kippbare Tragplatte (3) aufweisenden Wagen (2) auf einem Förderstrang einer etwa rechtwinklig dazu angeordneten Ausschleusvorrichtung (10) zugeführt werden, wobei die in Förderrichtung der auszuschleusenden Gegenstände nach unten geneigt angeordnete Ausschleusvorrichtung (10) an einem Eingang (18) mit den von den Wagen (2) gekippten Gegenständen (4) beladbar und an einem Ausgang (19) von den Gegenständen (4) entladbar ist, und die zwischen Eingang (18) und Ausgang (19) mit Gegenständen (4) füllbar ist, dadurch gekennzeichnet, dass die Ausschleusvorrichtung (10) vor dem Ausgang ein Taktband (17) aufweist und vor diesem wenigstens ein weiteres Band (11, 12) angeordnet ist, auf dem wenigstens ein Gegenstand (4) zur gesteuerten Abgabe an das Taktband (17) positionierbar ist.

2. Anlage nach Anspruch 1, dadurch gekennzeichnet, dass das vor dem Taktband (17) angeordnete Band (12) ein Bremsband ist.

3. Anlage nach Anspruch 1, dadurch gekennzeichnet, dass nach dem Eingang (18) ein Abzugsband (11) angeordnet ist.

4. Anlage nach Anspruch 3, dadurch gekennzeichnet, dass das Abzugsband (11) an seiner Aussenseite (lla) vergleichsweise stark adhäsiv und die Aussenseite (12a) des Bremsbandes (12) vergleichsweise wesentlich weniger adhäsiv ausgebildet sind.

5. Anlage nach einem der Ansprüche 2 - 4, dadurch gekennzeichnet, dass das Bremsband (12) mit einer wesentlich kleineren Geschwindigkeit als das Abzugsband (11) bewegbar ist.

6. Anlage nach einem der Ansprüche 3 - 5, dadurch gekennzeichnet, dass das Abzugsband (11) und/ oder das Bremsband (12) wesentlich kürzer als das Taktband (17) sind.

7. Anlage nach einem der Ansprüche 1 - 6, dadurch gekennzeichnet, dass vor dem Eingang des Taktbandes (17) eine Schranke (21), beispielsweise eine Lichtschranke angeordnet ist, mit welcher die Anwesenheit wenigstens eines Gegenstandes (4) vor dem Taktband (17) feststellbar ist.

8. Anlage nach einem der Ansprüche 1 - 7, dadurch gekennzeichnet, dass am Ausgang (19) des Taktbandes (17) eine Schranke (22), beispielsweise eine Lichtschranke angeordnet ist, mit der die Anwesenheit wenigstens eines Gegenstandes am Ausgang (19) des Taktbandes (17) feststellbar ist.

9. Anlage nach einem der Ansprüche 1 - 8, dadurch gekennzeichnet, dass am Eingang (18) der Ausschleusvorrichtung (10) seitlich angeordnete Leitwände (16) angebracht sind.

10. Anlage nach einem der Ansprüche 1 - 9, dadurch gekennzeichnet, dass der Förderer (1) in wenigstens zwei in Förderrichtung aufeinanderfolgenden Positionen entladbar ist, derart, dass die Ausschleusvorrichtung (10) abwechselnd links- und rechtsseitig beladbar ist.

11. Anlage nach einem der Ansprüche 1 - 10, dadurch gekennzeichnet, dass die Ausschleusvorrichtung (10) geneigt ist, d.h. der Eingang (18) weiter oben als der Ausgang (19) angeordnet ist.

12. Verfahren zur Kommissionierung von Gegenständen (4), die mittels einer Vielzahl gelenkig verbundener, eine seitlich kippbare Tragplatte (3) aufweisenden Wagen (2) auf einem Förderstrang einer etwa rechtwinklig dazu angeordneten Ausschleusvorrichtung (10) zugeführt werden, wobei die in Förderrichtung der auszuschleusenden Gegenstände nach unten geneigt angeordnete Ausschleusvorrichtung (10) an einem Eingang (18) mit den von den Wagen (2) gekippten Gegenständen (4) beladbar und an einem Ausgang (19) von den Gegenständen (4) entladbar ist, und die zwischen Eingang (18) und Ausgang (19) mit Gegenständen (4) füllbar ist, dadurch gekennzeichnet, dass die Gegenstände (4) auf der Ausschleusvorrichtung (10) in eine vorbestimmte Position gebracht und aus dieser Position getaktet weiter gefördert und vor dem Ausgang (19) in wenigstens einer vergleichsweise dichten Reihe zur Entnahme angeordnet werden.

13. Verfahren nach Anspruch 12, dadurch gekennzeichnet, dass die Gegenstände (4) am Eingang (18) der Ausschleusvorrichtung (10) von einem Förderer (1) abgezogen werden.

14. Verfahren nach Anspruch 12, dadurch gekennzeichnet, dass die Gegenstände (4) nach dem Abziehen gebremst werden.

15. Verfahren nach einem der Ansprüche 12 - 14, dadurch gekennzeichnet, dass die Längen der Gegenstände (4) beispielsweise mittels einer Lichtschranke (21) gemessen und entsprechend dieser Messungen getaktet wird.

16. Verfahren nach einem der Ansprüche 12 - 15, dadurch gekennzeichnet, dass die Gegenstände (4) von oben nach unten gefördert werden.

## Claims

1. Installation for commissioning objects (4) which are fed to a transfer device (10) by means of a multiplicity of articulatedly connected carriages (2) on a conveyor strand, the carriages (2) having a sideways tiltable support plate (3), the transfer device (10) being arranged at about right angles to the conveyor strand, wherein the transfer device (10) is arranged downwardly inclined in the conveying direction of the objects to be transferred out and can be loaded at an entrance (18) with the objects (4) tilted from the carriages (2) and can have the objects (4) unloaded from it at an exit (19) and can be filled with objects (4) from entrance (18) to exit (19), characterised in that the transfer device (10) has a timed belt (17) before the exit, and that before the timed belt (17) there is arranged at least one further belt (11, 12) on which at least one object (4) can be positioned to be passed on to the timed belt (17) in controlled manner.

2. Installation according to claim 1, characterised in that the belt (12) arranged before the timed belt (17) is a braking belt.

3. Installation according to claim 1, characterised in that a take off belt (11) is arranged after the entrance (18).

4. Installation according to claim 3, characterised in that the take off belt (11) at its outer surface (11a) is made comparatively strongly adhesive and the outer surface (12a) of the braking belt (12) is made comparatively substantially less adhesive.

5. Installation according to one of claims 2 - 4, characterised in that the braking belt (12) can be made to travel at a substantially slower speed than the take off belt (11).

6. Installation according to one of claims 3 - 5, characterised in that the take off belt (11) and/or the braking belt (12) are substantially shorter than the timed belt (17).

7. Installation according to one of claims 1 - 6, characterised in that before the entrance to the timed belt (17) there is arranged a barrier (21), for example a light barrier, by means of which the presence of at least one object (4) before the timed belt (17) can be ascertained.

8. Installation according to one of claims 1 - 7, characterised in that a barrier (22), for example a light barrier, is arranged at the exit (19) of the timed belt (17) by means of which the presence of at least one object at the exit (19) of the timed belt (17) can be ascertained.

9. Installation according to one of claims 1 - 8, characterised in that guide walls (16) are arranged laterally at the entrance (18) of the transfer device (10).

10. Installation according to one of claims 1 - 9, characterised in that the conveyor (1) can be unloaded in at least two positions succeeeding one another in the conveying direction, such that the transfer device (10) can be loaded alternately on the left and on the right.

11. Installation according to one of claims 1 - 10, characterised in that the transfer device (10) is inclined, i.e. that the entrance (18) is arranged higher up than the exit (19).

12. Method of commissioning objects (4) which are fed to a transfer device (10) by means of a multiplicity of articulatedly connected carriages (2) on a conveyor strand, the carriages (2) having a sideways tiltable support plate (3), the transfer device (10) being arranged at about right angles to the conveyor strand, wherein the transfer device (10) is arranged downwardly inclined in the conveying direction of the objects to be transferred out and can be loaded at an entrance (18) with the objects (4) tilted from the carriages (2) and can have the objects (4) unloaded from it at a exit (19) and can be filled with objects (4) from entrance (18) to exit (19), characterised in that the objects (4) are brought to a predetermined position on the transfer device (10) and are conveyed onwards from this position in timed manner and are arranged before the exit (19) in at least comparatively tight succession for removal.

13. Method according to claim 12, characterised in that the objects (4) are taken off a conveyor (1) at the entrance (18) to the transfer device (10).

14. Method according to claim 12, characterised in that the objects (4) are slowed down after being taken off.

15. Method according to one of claims 12 - 14, characterised in that the lengths of the objects (4) are measured, for example by means of a light barrier (21), and that the timing is carried out in dependence upon these measurements.

16. Method according to one of claims 12 - 15, characterised in that the objects (4) are conveyed from higher up to lower down.

## Revendications

1. Installation pour préparer la commande d'articles (4) qui, au moyen d'une pluralité de chariots (2) reliés de façon articulée et comportant un plateau de support pouvant basculer latéralement (3), sont amenés sur une voie de transport d'un dispositif d'éclusage en sortie (10) associé à peu près perpendiculairement à celle-ci, le dispositif d'éclusage en sortie (10), disposé sur un plan incliné vers le bas dans la direction de transport des articles à écluser en sortie, pouvant, en une entrée (18), être chargé avec les articles (4) basculés par les chariots (2) et pouvant, en une sortie (19), être déchargé des articles (4), et, pouvant, entre l'entrée (18) et la sortie (19), être rempli avec des articles (4), caractérisée en ce que le dispositif d'éclusage en sortie (10) comporte, avant la sortie, une bande de transport synchronisée (17) et en ce qu'il est prévu, avant celle-ci, au moins une bande supplémentaire (11, 12), sur laquelle au moins un article (4) peut être positionné pour le déchargement régulé vers la bande de transport synchronisée (17).

2. Installation selon la revendication 1, caractérisée en ce que la bande (12) placée avant la bande de transport synchronisée (17) est une bande de frein.

3. Installation selon la revendication 1, caractérisée en ce qu'une bande de reprise (11) est disposée après l'entrée (18).

4. Installation selon la revendication 3, caractérisée en ce que la bande de reprise (11) est conçue sur sa face extérieure (11a) de façon comparativement très adhésive, et en ce que la face extérieure (12a) de la bande de frein (12) est conçue de façon comparativement sensiblement moins adhésive.

5. Installation selon rune des revendications 2 à 4, caractérisée en ce que la bande de frein (12) peut être mise en mouvement selon une vitesse sensiblement inférieure à celle de la bande de reprise (11).

6. Installation selon l'une des revendications 3 à 5, caractérisée en ce que la bande de reprise (11) et/ou la bande de frein (12) sont sensiblement plus courtes que la bande de transport synchronisée (17).

7. Installation selon l'une des revendications 1 à 6, caractérisée en ce qu'une barrière (21) est prévue avant l'entrée de la bande de transport synchronisée (17), par exemple une barrière photoélectrique, par l'intermédiaire de laquelle la présence d'au moins un article (4) avant la bande de transport synchronisée (17) peut être détectée.

8. Installation selon l'une des revendications 1 à 7, caractérisée en ce qu'une barrière (22) est prévue à la sortie (19) de la bande de transport synchronisée (17), par exemple une barrière photoélectrique, par l'intermédiaire de laquelle la présence d'au moins un article (4) à la sortie (19) de la bande de transport synchronisée (17) peut être détectée.

9. Installation selon l'une des revendications 1 à 8, caractérisée en ce que des parois de guidage (16) sont prévues, disposées latéralement à l'entrée (18) du dispositif d'éclusage en sortie (10).

10. Installation selon l'une des revendications 1 à 9, caractérisée en ce que le convoyeur (1) peut être déchargé dans au moins deux positions se succédant dans la direction de transport, de telle sorte que le dispositif d'éclusage en sortie (10) puisse être chargé en alternance du côté gauche et du côté droit.

11. Installation selon l'une des revendications 1 à 10, caractérisée en ce que le dispositif d'éclusage en sortie (10) est incliné, c'est-à-dire que l'entrée (18) est placée plus haut que la sortie (19).

12. Procédé pour préparer la commande d'articles (4), qui, au moyen d'une pluralité de chariots (2) reliés de façon articulée et comportant un plateau de support pouvant basculer latéralement (3), sont amenés sur une voie de transport d'un dispositif d'éclusage en sortie (10) associé à peu près perpendiculairement à celle-ci, le dispositif d'éclusage en sortie (10), disposé sur un plan incliné vers le bas dans la direction de transport des articles à écluser en sortie, pouvant, en une entrée (18), être chargé avec les articles (4) basculés par les chariots (2) et pouvant, en une sortie (19), être déchargé des articles (4), et, pouvant, entre l'entrée (18) et la sortie (19), être rempli avec des articles (4), caractérisé en ce que les articles (4) sont placés sur le dispositif d'éclusage en sortie (10) suivant une position prédéterminée et que, depuis cette position, ils sont transportés plus avant de façon synchronisée et disposés avant la sortie (19) en au moins une rangée de prélèvement comparativement compacte.

13. Procédé selon la revendication 12, caractérisé en ce que les articles (4) sont repris par un convoyeur (1) à l'entrée (18) du dispositif d'éclusage en sortie (10).

14. Procédé selon la revendication 12, caractérisé en ce que les articles (4) sont freinés après le retrait.

15. Procédé selon l'une des revendications 12 à 14, caractérisé en ce que les longueurs des articles (4) sont mesurées au moyen d'une barrière photoélectrique (21) par exemple et qu'ils sont synchronisés en fonction de ces mesures.

16. Procédé selon l'une des revendications 12 à 15, caractérisé en ce que les articles (4) sont transportés de haut en bas.
